# EUROPÄISCHE PATENTSCHRIFT

(11) **EP 1 478 575 B1**
(45) Veröffentlichungstag und Bekanntmachung des Hinweises auf die Patenterteilung: **08.08.2007**
(21) Anmeldenummer: 03704693.5
(22) Anmeldetag: 26.02.2003
(51) Int. Cl.: B65D 5/04, B62D 3/12

(54) **DRUCKSTÜCKEINHEIT FÜR ELEKTROMECHANISCHE LENKUNGEN**
PRESSURE PLATE UNIT FOR ELECTROMECHANICAL STEERING SYSTEMS
UNITE PLAQUE D'APPUI POUR DIRECTIONS ELECTROMECANIQUES

(30) Priorität: 28.02.2002 DE 10208947
(43) Veröffentlichungstag der Anmeldung: 24.11.2004
(73) Patentinhaber: ZF Lenksysteme GmbH, 73527 Schwäbisch Gmünd (DE)
(72) Erfinder: BIEBER, Jürgen, 73529 Schwäbisch Gmünd (DE); SCHÄNZEL, Rainer, 73457 Essingen (DE); SCHMIDT, Michael, 73655 Plüderhausen (DE)
(86) Internationale Anmeldenummer: PCT/EP2003/001950
(87) Internationale Veröffentlichungsnummer: WO 2003/072442

(56) Entgegenhaltungen:
- EP-A- 1 069 330
- DE-A- 19 937 254
- GB-A- 1 383 517

## Beschreibung

Die Erfindung betrifft eine Druckstückeinheit für elektro-mechanische Lenkungen, nach dem Oberbegriff des Patentanspruches 1.

Allgemein bekannt sind manuelle Lenkungen, bei welchen das durch den Fahrer auf die Lenkhandhabe aufgebrachte Betätigungsmoment über die Lenkspindel, das Lenkgetriebe und die Spurstangen auf die lenkbaren Räder übertragen wird. Auch sind lenkkraftunterstützte Lenkungen bekannt, bei denen das durch den Fahrer aufgebrachte Betätigungsmoment anteilmäßig durch andere Energiequellen übernommen wird. Je nach Art der Energiequelle unterscheidet man zwischen hydraulischer, pneumatischer oder elektrischer Lenkkraftunterstützung. Schließlich sind Fremdkraftlenkungen bekannt, bei welchen die Lenkkraft ausschließlich von einer im Fahrzeug vorhandenen Energiequelle aufgebracht wird, d. h. die Lenkhandhabe ist lediglich über eine Regelstrecke wirkungsmäßig mit einem die Fahrzeuglenkräder betätigendem Motor verbunden.

Diese beschriebenen Lenkungen weisen, z. B. zur Umwandlung des Drehmomentes der Lenkspindel in eine translatorische Bewegung der Zahnstange und / oder zur Übertragung der Hilfs- bzw. Fremdkraft von einem Elektromotor in das Lenksystem, mechanische Getriebe auf.

Bei mechanischen Getrieben treten herstellungsbedingte Toleranzen, wie Zahndikkenabmaß, Flankenformfehler, Rundlauffehler, Teilungsfehler und Achsabstandsabweichungen auf. Um ein Klemmen der Übertragungselemente zu vermeiden, muss daher stets ein Spiel vorhanden sein. Durch den Verschleiß nimmt dieses Getriebespiel über die Lebensdauer noch zu. Dieses Spiel ist bei Anwendungen, wie in Übertragungs- bzw. Umwandlungsgetrieben für Fahrzeug-Lenkvorrichtungen störend, da dort eine Spielfreiheit in beide Drehrichtungen erforderlich ist. An der Lenkhandhabe ist sonst die Unstetigkeit im Momentenverlauf durch das Getriebespiel spürbar und es treten Geräusche beim Wechsel der Drehrichtung auf.

Bei Lenkeinrichtungen konventioneller Bauart oder mit hydraulischer Lenkkraftunterstützung drückt bekanntermaßen, wie in der DE 34 08 673 A1 beschrieben, ein Druckstück durch die federnde Kraft einer Feder gegen die Rückseite der Zahnstange, um einen spielfreien Zahneingriff zwischen Zahnstange und Ritzel zu gewährleisten. Dabei stützt sich die Feder gegen die Innenseite eines Schraubdeckels unter Einhaltung eines begrenzten Spaltes (Spiel) zwischen Deckel und Druckstück ab. Das Spiel und die federnde Kraft der Feder können durch den Betrag des Einschraubens des Deckels eingestellt werden.

Ober die Lebensdauer gesehen, tritt infolge von hohen Kräften, wie sie z. B. bei elektro-mechanischen Hilfs- bzw. Fremdkraftlenkungen auftreten, ein erhöhter Verschleiß an miteinander korrespondierenden Bauteilen auf, wodurch sich das Spiel vergrößert. Die dadurch gegebene, vergrößerte axiale Ausweichmöglichkeit des Druckstückes, kann, trotz z. B. einer Feder zwischen Druckstück und Stellschraube, zu einem störenden Geräuschverhalten führen und das gute Lenkgefühl, welches bei hydraulisch unterstützten Lenkungen vorhanden ist, geht verloren.

In der DE-A-199 37 254 wird eine Druckstückeinheit zum Andrücken einer Zahnstange eines Zahnstangenlenkgetriebes für Kraftfahrzeuge an eine Verzahnung eines Ritzels beschrieben, mit einer Gehäusebuchse, welche eine koaxial zu einer Längsachse angeordnete im wesentlichen zylindrische Wand aufweist und zur Aufnahme in eine Aufnahmebohrung eines Lenkgetriebegehäuse eines Zahnstangenlenkgetriebes bestimmt ist, mit einer Hülse, welche eine koaxial zur Längsachse angeordnete zylindrische Wand aufweist und entlang der Längsachse zwischen einer ersten Position und einer zweiten Position in der Gehäusebuchse verschiebbar geführt ist, wobei die Hülse zum Andrücken der Zahnstange mittels erster Federmittel in Richtung zur zweiten Position beaufschlagt ist, mit einem Druckstück, welches eine Druckfläche zum Beaufschlagen eines Zahnstangenrückens der Zahnstange aufweist und entlang der Längsachse zwischen einer ersten Position und einer zweiten Position in der Hülse verschiebbar geführt ist, wobei das Druckstück zum Beaufschlagen des Zahnstangenrückens mittels zweiter Federmittel in Richtung zur zweiten Position beaufschlagt ist, mit einem Ausgleichszylinder, sowie mit einem Ausgleichskolben, welcher in den Ausgleichszylinder eintaucht, wobei der Ausgleichskolben relativ zum Ausgleichszylinder in Abhängigkeit der Bewegung der Hülse relativ zum Druckstück bewegbar ist, und mit einem Saugventil, welches den Ausgleichzylinder leitungsmässig mit einem Reservoir für Hydraulikflüssigkeit verbindet, wobei ein Durchfluss vom Ausgleichszylinder in Richtung zum Reservoir gesperrt und ein Durchfluss vom Reservoir in Richtung zum Ausgleichszylinder frei ist

Eine weitere Lösung einer hydraulischen Druckstückeinheit ist in der GB-A-1 383 517 offenbart.

Bei elektrisch angetriebenen Lenkungen sind Vorrichtungen bekannt, bei welchen die Federelemente eine größere Kraft als die Zahntrennkräfte erzeugen und demzufolge kein Getriebespiel auftritt. Diese Federelemente sind für den Bereich um den Geradeauslauf dimensioniert Es können jedoch auch im Bereich des Geradeauslaufs schon große Kräfte auftreten, deshalb sind auch die Federkräfte groß, mit dem Nachteil, dass im Getriebesystem eine große Grundreibung durch die großen Federkräfte vorhanden ist Die Rückstellkräfte der zu lenkenden Räder auf die Lenkeinrichtung reichen nicht immer aus, um den Geradeauslauf von selbst wieder einzustellen. Die Veränderung der Haft-Gleitreibung im Getriebe und deren zusätzliche Veränderung über den Temperaturbereich, die Drehrichtung und den Verschleißzustand, sorgen für ein schlechtes Lenkgefühl.

Weiterhin ist es bekannt, das Getriebespiel zu beseitigen, in dem je ein elektrischer Antrieb eine Drehrichtung absichert Ein Antrieb bringt das Lenkmoment in eine Drehrichtung, während der andere Antrieb ein definiertes kleineres Gegenmoment in das Getriebe einleitet, sodass immer Spielfreiheit gegeben ist, wodurch ein gutes Lenkgefühl erreicht wird. Diese Wirkung ist nur durch zwei Elektromotoren und deren aufwendiger Regelung bei entsprechenden Mehrkosten erreichbar.

Der im Patentanspruch 1 angegebenen Erfindung liegt das Problem zugrunde, eine Druckstückeinheit der eingangs angegebenen Art zu konzipieren, bei welcher das Getriebespiel keinen negativen Einfluss auf das Lenkgefühl ausübt und die Grundreibung im Getriebe möglichst klein bleibt. Das Problem wird durch die im kennzeichnenden Teil des Patentanspruches aufgeführten Merkmale gelöst, indem ein in der Druckstückeinheit integriertes Ausgleichselement aus einem die Niederdruckkammer abschließenden membranartigen Balg oder aus einem schwammartigen Ringelement besteht, welches in einer im Druckstück ausgesparten Ringnut angeordnet ist.

Die mit der Erfindung erzielten Vorteile bestehen insbesondere darin, dass mit der Druckstückeinheit eine gleichbleibende Dämpfung, unabhängig von der Druckstückposition, dem Verschleiß und von den Temperatureinflüssen erreicht wird.

Vorteilhafte Weiterbildungen der Erfindung sind in den abhängigen Ansprüchen angegeben.

Ein Ausführungsbeispiel der Erfindung ist in der Zeichnung dargestellt und im Folgenden näher erläutert. Es zeigen:
- Fig. 1: eine schematische Darstellung einer erfindungsgemäßen Druckstückeinheit;
- Fig. 2: eine Kraft-Verzahnungsspiel-Kennlinie;
- Fig. 3: eine schematische Darstellung einer elektro-mechanischen Lenkung;
- Fig. 4: eine Darstellung einer Druckstückeinheit mit hydraulischer Dämpfung;
- Fig. 5: eine Darstellung einer Druckstückeinheit mit hydraulischer Dämpfung in einer anderen Ausführungsform.

Im Wesentlichen gleiche Teile in den unterschiedlichen Figuren sind mit gleichen Bezugszeichen versehen.

In der Zeichnung ist eine Druckstückeinheit 27 dargestellt, die in Getriebestufe 26 mit elektro-mechanischer Lenkkraftunterstützung von Kraftfahrzeugen angewandt wird, um z. B. das Antriebsritzel, welches mit der Lenkhandhabe 20 über eine Lenksäule 24 verbunden ist, mit der Verzahnung der Zahnstange 5, die beidseitig über Spurstangen 28 und Lenkhebel mit den lenkbaren Rädern 29 verbunden ist, in einem ständigen Eingriff zu halten.

In einem anderen Anwendungsfall wird die Druckstückeinheit 25, wenn der die Lenkkraft unterstützende Elektro-Motor 22 z. B. als Lenksäulenantrieb gestaltet ist, in dem Untersetzungsgetriebe 23 des Motoranschlusses integriert. (Die Möglichkeit der Anwendung der Druckstückeinheit bei einem nicht dargestellten Ritzel-, Doppelritzel- oder achsparallelem Antrieb besteht ebenfalls). Auch ist der Einsatz der Druckstückeinheit 25 bei dem Lenkmotor- bzw. Lenkradmotoranschluss einer als "Steer by Wire" bezeichneten fremdkraftunterstüzten Fahrzeuglenkung möglich.

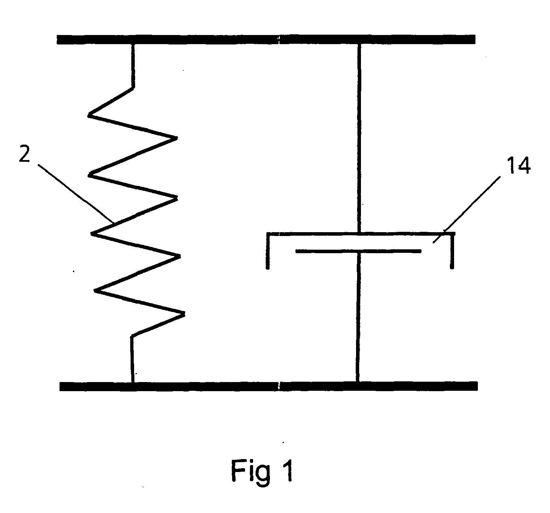

In der Fig. 1 ist die parallele Anordnung einer Feder 2, die die Verzahnungen von Übertragungsbauteilen der Getriebestufen 23, 26 ineinander drückt, zu einem Fluiddämpfer 14 dargestellt, dessen Wirkung im Wesentlichen nur in Richtung Verzahnung erfolgt. Um eine geringe Grundreibung zu erreichen, wobei die Verzahnungsbauteile trotzdem in verzahntem Eingriff gehalten werden, ist die Feder 2 mit einer geringen Federkraft ausgestattet, während mit einer großen Dämpfung gearbeitet wird.

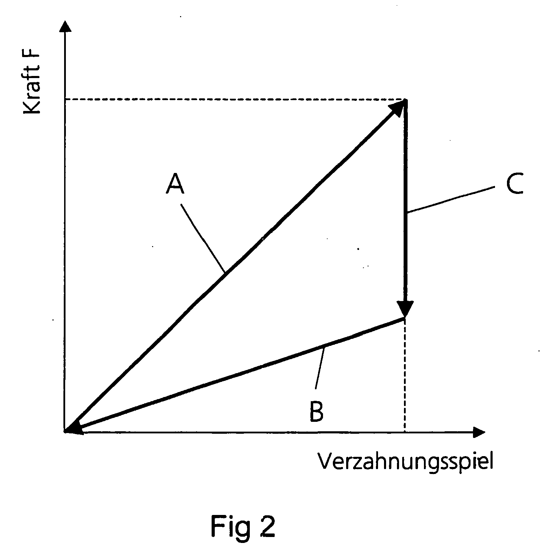

Wie aus Fig. 2 ersichtlich ist, müssen die Zahntrennkräfte A wesentlich größer sein als die Rückstellkräfte B. Dadurch tritt das maximal mögliche Verzahnungsspiel aufgrund des Dämpfers 14 nur bei sehr großen Lenkkräften auf, sodass das Verzahnungsspiel in den meisten Lenksituationen im Wesentlichen gering und demzufolge das Lenkgefühl an der Lenkhandhabe 20 gut ist. Diese Wirkung ist mit dem Einsatz eines Dämpfers 14 besonders im sensiblen Mittenbereich möglich, da die Lenkkräfte hier nicht die Maximalwerte erreichen. Die Energie C der Zahntrennkräfte A wird im Dämpfer 14 in disserpierte Energie umgewandelt und lässt dadurch über die einwirkende Zeit in Abhängigkeit der zugeführten Energie nur ein langsames Anwachsen des Verzahnungsspiels zu.

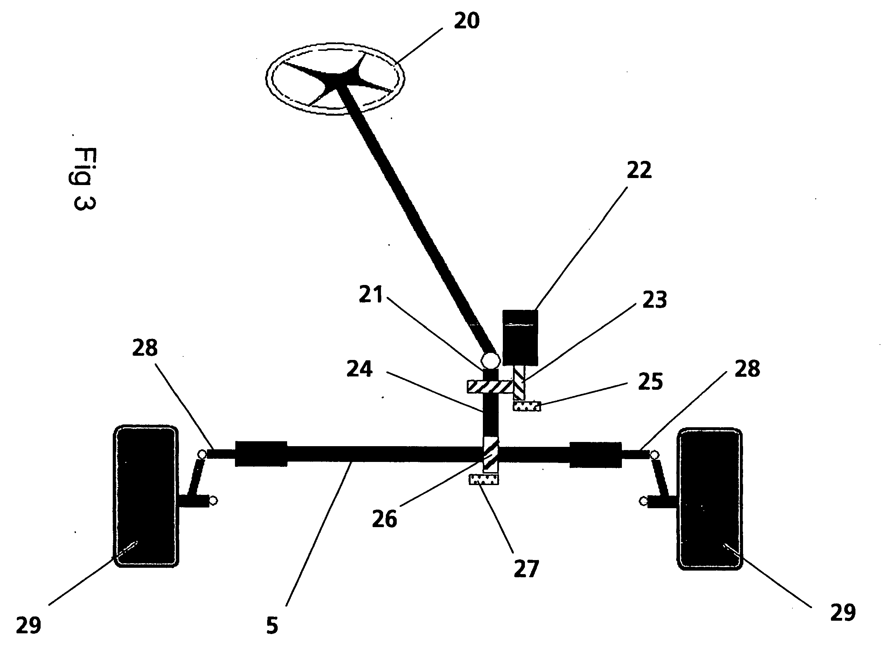

Je nach Abstimmung der parallel geschalteten mechanischen Feder 2 und des Dämpfers 14 kann unterschiedliches Belastungs- bzw. Entlastungsverhalten zeitabhängig erzeugt werden.
Eine schematische Darstellung eines Lenksystemes mit elektrischem Antrieb 22 und mehreren Getriebestufen 23, 26 ist in Fig. 3 dargestellt. Jede Getriebestufe 23, 26 besteht mindestens aus zwei Verzahnungsteilen, sodass jeweils miteinander korrespondierende Verzahnungsbauteile durch eine Einheit aus Dämpfer 14 und Feder 2 belastet werden.

An der Lenkhandhabe 20 leitet der Fahrer ein nach links und rechts wechselndes Drehmoment ein, um die Fahrtrichtung des Fahrzeuges zu bestimmen. Eine Sensoreinheit 21 ermittelt die Drehrichtung und das Drehmoment und regelt so den Elektromotor 22 der Servoeinheit. Die Servoeinheit gibt die durch den Fahrer vorbestimmte Drehrichtung und ein verstärktes Drehmoment über eine erste Getriebestufe 23 in die Lenksäule 24 ein. Das Getriebespiel wird durch eine erfindungsgemäße Druckstückeinheit 25 so reduziert, dass es an der Lenkhandhabe 20 nicht wahrnehmbar ist. Dieses Drehmoment wird durch eine weitere Getriebestufe 26 untersetzt und in eine translatorische Bewegung der Zahnstange umgewandelt. Wie die Getriebestufe 23 ist auch die Getriebestufe 26 mit einer Druckstückeinheit 27 ausgestattet. Durch den Einsatz der beiden Druckstückeinheiten 25, 27 wird das vorhandene mögliche Getriebespiel der Verzahnungen aus den Getriebestufen 23 und 26 nur begrenzt zugelassen, in dem die Energie C der Zahntrennkräfte A bei der Spielzunahme im Dämpfer 14 in disserpierte Energie umgewandelt wird.

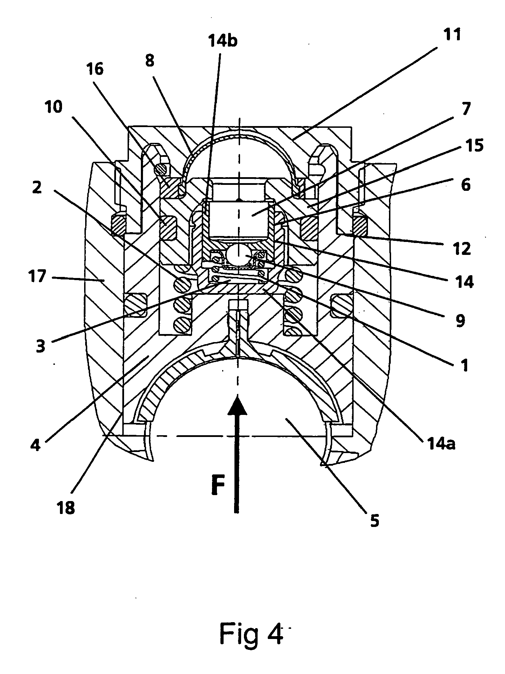

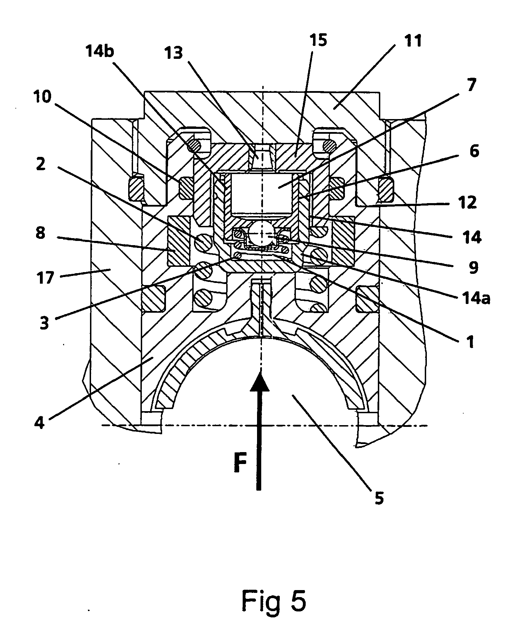

In den Figuren 4 und 5 ist jeweils die konstruktive Gestaltung einer Ausführungsform einer erfindungsgemäßen Druckstückeinheit 27 dargestellt, wie sie verwandt wird, Ritzel und Zahnstange 5 des Lenkgetriebes im ständigen Eingriff zu halten.

Die Druckstückeinheit 27 ist in eine Aufnahmebohrung 18 des Lenkgetriebegehäuses 17 derart integriert, dass das der Verzahnung der Zahnstange gegenüberliegende Teil der Zahnstange 5 mit der Aufnahme der Druckstückeinheit 27, die in ihrer geometrischen Form dem Zahnstangenrücken angepasst und mit einem einen geringen Reibungskoeffizienten aufweisenden Material ausgekleidet ist, korrespondiert.

Die Druckstückeinheit 27 weist ein Druckstück 4 auf, das axial zur Symmetrieachse der Druckstückeinheit 27 in der Bohrung 18 des Getriebegehäuses 17 bewegbar angeordnet ist. Dieses Druckstück 4 ist derart ausgebildet, dass an ihm zahnstangenseitig die Aufnahme für den Zahnstangenrücken angeordnet ist und dass weiterhin an seiner vom Zahnstangenrücken abgewandten Seite, die räumlichen Voraussetzungen für zwei Fluidkammern 1, 7 die durch den Kolbenteil 14b des Fluiddämpfers 14 voneinander getrennt sind, auf.

Der Fluiddämpfer 14 besteht aus einem Gehäusetopf 14a, in welchem ein Kolben 14b axial beweglich integriert ist. Gehäusetopf 14a und Kolben 14b werden durch eine Kolbenfeder 3 mit geringer Federkraft auseinander gedrückt. Im Kolben 14b ist eine durch ein Rückschlagventil 9 verschlossene Öffnung angeordnet.

Durch die Druckfeder 2 wird eine kleine Andrückkraft auf die Zahnstange 5 oder dessen Lagerung ausgeübt.

Das Druckstück 4 wird durch eine Stellschraube 11 in der Gehäusebohrung des Gehäuses 17 gehalten. Vor der Justierung der Stellschraube 11 ist einSpielwert (Spalt 12) vorzusehen.

Zwischen Kolben 14b und Innenwandung des Gehäusetopfes 14a wird ein Ringspalt 6, welcher koaxial zur Symmetrieachse der Druckstückeinheit 27 verläuft, gebildet.

Die Niederdruckkammer 7 ist in der Ausführungsform nach Fig. 4 durch einen über den Balghalter 16 befestigten Balg, der als Ausgleichselement 8 wirkt und sich bei Belastung dehnt und bei Entlastung zusammenzieht und einen O-Ring 10, stirnseitig abgeschlossen.

In der Ausführungsform nach Fig. 5 ist das Druckstück 4 stimseitg über eine Bodenplatte 15, die einen Verschlussstopfen 13 aufweist, mittels O-Ring 10 dichtend abgeschlossen. Als Ausgleichselement 8 dient ein schwammförmiges Ausgleichselement 8, das in einer Ringnut der Innenwandung der Niederdruckkammer 7 integriert ist und bei Belastung komprimiert wird und sich bei Entlastung wieder ausdehnt.

Bei Betrieb der Lenkung und damit Beanspruchung des Lenkgetriebes wird die Aufnahme und damit das Druckstück 4 durch eine Ausweichbewegung der Zahnstange 5 mit der Kraft F beaufschlagt. Durch Komprimierung des Hochdruckraumes 1, der Druckfedern 2 und 3, wird ein Ausweichen des Druckstückes 4 innerhalb des Spiels 12 verzögert, da sich im Hochdruckraum 1 ein inkompressibles Medium, das nur über die als Ringspalt 6 ausgebildete Drosselstelle in den Niederdruckraum 7 entweichen kann, verzögert.

Damit das Medium in den restlos gefüllten Niederdruckraum 7 fließen kann, wird das Ausgleichselement 6, je nach Ausführungsform, gedehnt, bzw. komprimiert.

Bei Entlastung der Aufnahme und damit des Druckstückes 4 wird die Zahnstange durch die Druckfeder 2 in die Ritzelverzahnung gedrückt. Die vorgespannte Druckfeder 2 zieht den Hochdruckraum 1 auf. Dadurch wird das Volumen im Hochdruckraum 1 vergrößert und es entsteht ein Unterdruck. Das Rückschlagventil 9 öffnet und das Hydraulikmedium kann vom Niederdruckraum 7 in den Hochdruckraum 1 nachfließen. Das Ausgleichselement entspannt bzw. dehnt sich in den ursprünglichen Zustand aus.

### Aufstellung der-verwendeten Bezugszeichen

- 1: Hochdruckkammer
- 2: Druckfeder
- 3: Kolbenfeder
- 4: Druckstück
- 5: Zahnstange
- 6: Ringspalt
- 7: Niederdruckraum
- 8: Ausgleichselement
- 9: Rückschlagventil
- 10: O-Ring
- 11: Stellschraube
- 12: Spiel
- 13: Verschlussstopfen
- 14: Fluiddämpfer
- 14a: Gehäusetopf
- 14b: Kolben
- 15: Bodenplatte
- 16: Halter für Balg
- 17: Getriebegehäuse
- 18: Bohrung
- 20: Lenkhandhabe
- 21: Sensoreinheit
- 22: Elektromotor
- 23: Getriebestufe
- 24: Lenksäule
- 25: Druckstückeinheit
- 26: Getriebestufe
- 27: Druckstückeinheit
- 28: Spurstange
- 29: Rad
- A: Zahntrennkraft
- B: Rückstellkraft
- C: Energie
- F: Kraft

## Patentansprüche

1. Druckstückeinheit für elektro-mechanische Lenkungen, die eine mechanische Feder aufweist, um die Übertragungselemente der Getriebestufe(n) des Lenkungssystems im ständigen Eingriff zu halten, wobei parallel zu der mechanischen Feder (2) ein richtungsabhängiger Fluiddämpfer (14) integriert ist, der aus einem Kolben (14b), einem Gehäusetopf (14a) und einer Kolbenfeder (3) besteht, wobei der Kolben (14b) des Fluiddämpfers (14) axial beweglich in einem ihn koaxial umgebenden Gehäusetopf (14a) angeordnet ist, und die Druckstückeinheit (25, 27) ein Ausgleichselement (8) aufweist, **dadurch gekennzeichnet, dass** das Ausgleichselement (8) aus einem die Niederdruckkammer (7) abschließenden membranartigen Balg oder aus einem schwammartigen Ringelement besteht, welches in einer im Druckstück (4) ausgesparten Ringnut angeordnet ist.

2. Druckstückeinheit nach Anspruch 1, **dadurch gekennzeichnet, dass** der Balg die Niederdruckkammer stirnseitig abschließt.

3. Druckstückeinheit nach einem der Ansprüche 1 bis 2, **dadurch gekennzeichnet, dass** der Kolben (14b) des Fluiddämpfers (14) derart axial beweglich in dem ihn koaxial umgebenden Gehäusetopf (14a) angeordnet, dass dabei eine als Ringspalt (6) ausgeführte Drosselstelle zwischen Kolben (14b) und Innenwandung des Gehäusetopfes (14a) gebildet wird.

4. Druckstückeinheit nach einem der Ansprüche 1 bis 3, **dadurch gekennzeichnet, dass** die Druckstückeinheit (25, 27) modular als ein in sich geschlossenes System ausgeführt ist.

5. Druckstückeinheit nach einem der Ansprüche 1 bis 4, **dadurch gekennzeichnet, dass** das maximale Verzahnungsspiel durch die Stellschraube (11) einstellbar ist.

6. Druckstückeinheit nach einem der Ansprüche 1 bis 5, **dadurch gekennzeichnet, dass** die modulare Druckstückeinheit (25, 27) axial begrenzt bewegbar in eine Bohrung (18) des Gehäuses einer Getriebestufe (23 oder 26) angeordnet ist.

7. Druckstückeinheit nach einem der Ansprüche 1 bis 6, **dadurch gekennzeichnet, dass** die modulare Druckstückeinheit (25, 27) aus einem Druckstück (4) besteht, welches getriebestufenseitig als korrespondierendes Verbindungsglied zur Getriebestufe (23 oder 26) ausgebildet ist und an der von der Getriebestufe (23 oder 26) abgewandten Seite räumliche Voraussetzungen für zwei Fluidkammern (1 und 7) aufweist, die durch den Kolben (14b) eines Fluiddämpfers (14) wirkmäßig voneinander getrennt sind.

8. Druckstückeinheit nach Anspruch 7, **dadurch gekennzeichnet, dass** der Kolben (14b) eine die Fluidkammern (1 und 7) verbindende Drosselstelle und einen Durchlass aufweist, der durch ein Rückschlagventil (9) verschlossen wird.

9. Druckstückeinheit nach Anspruch 1 **dadurch gekennzeichnet, dass** die Kolbenfeder (3) zwischen dem Kolben (14b) und dem Boden des Gehäusetopfes (14a) integriert ist.

## Claims

1. Pressure-piece unit for electromechanical steering systems, which has a mechanical spring, in order to keep the transmission elements of the gear-mechanism stage or stages of the steering system in permanent engagement, a direction-dependent fluid damper (14) which comprises a piston (14b), a housing pot (14a) and a piston spring (3) being integrated parallel to the mechanical spring (2), the piston (14b) of the fluid damper (14) being arranged axially movably in a housing pot (14a) which surrounds it coaxially, and the pressure-piece unit (25, 27) having a compensation element (8), **characterized in that** the compensation element (8) comprises a diaphragm-like bellows which closes the low-pressure chamber (7) or a sponge-like annular element which is arranged in an annular groove which is cut out of the pressure piece (4).

2. Pressure-piece unit according to Claim 1, **characterized in that** the bellows closes the low-pressure chamber on the end side.

3. Pressure-piece unit according to either of Claims 1 and 2, **characterized in that** the piston (14b) of the fluid damper (14) is arranged axially movably in the housing pot (14a) which surrounds it coaxially, in such a way that a throttle point which is configured as an annular gap (6) is formed here between the piston (14b) and the inner wall of the housing pot (14a).

4. Pressure-piece unit according to one of Claims 1 to 3, **characterized in that** the pressure-piece unit (25, 27) is of modular configuration as an enclosed system.

5. Pressure-piece unit according to one of Claims 1 to 4, **characterized in that** the maximum toothing play can be set by the adjusting screw (11).

6. Pressure-piece unit according to one of Claims 1 to 5, **characterized in that** the modular pressure-piece unit (25, 27) is arranged in an axially limited manner such that it can move into a hole (18) of the housing of a gear-mechanism stage (23 or 26).

7. Pressure-piece unit according to one of Claims 1 to 6, **characterized in that** the modular pressure-piece unit (25, 27) comprises a pressure piece (4) which is configured on the side of the gear mechanism as a corresponding connecting element to the gear-mechanism stage (23 or 26) and has spatial conditions for two fluid chambers (1 and 7) on the side which faces away from the gear-mechanism stage (23 or 26), which two fluid chambers (1 and 7) are separated in action terms from one another by the piston (14b) of a fluid damper (14).

8. Pressure-piece unit according to Claim 7, **characterized in that** the piston (14b) has a throttle point which connects the fluid chambers (1 and 7) and a passage which is closed by a non-return valve (9).

9. Pressure-piece unit according to Claim 1, **characterized in that** the piston spring (3) is integrated between the piston (14b) and the base of the housing pot (14a).

## Revendications

1. Unité à élément de pression pour directions électromécaniques, laquelle présente un ressort mécanique pour maintenir les éléments de transmission du ou des étages d'engrenage du système de direction en prise constante, un amortisseur à fluide (14) dépendant de la direction étant intégré en parallèle avec le ressort mécanique (2), lequel se compose d'un piston (14b), d'un pot de boîtier (14a) et d'un ressort de piston (3), le piston (14b) de l'amortisseur à fluide (14) étant disposé avec une mobilité axiale dans un pot de boîtier (14a) qui l'entoure de manière coaxiale et l'unité à élément de pression (25, 27) présente un élément de compensation (8), **caractérisée en ce que** l'élément de compensation (8) se compose d'un soufflet de type membrane qui termine la chambre à basse pression (7) ou d'un élément annulaire spongieux qui est disposé dans une rainure annulaire creusée dans l'élément de pression (4).

2. Unité à élément de pression selon la revendication 1, **caractérisée en ce que** le soufflet ferme la chambre à basse pression du côté frontal.

3. Unité à élément de pression selon l'une des revendications 1 à 2, **caractérisée en ce que** le piston (14b) de l'amortisseur à fluide (14) est disposé avec une mobilité axiale dans le pot de boîtier (14a) qui l'entoure de manière coaxiale de manière à former un point d'étranglement réalisé sous la forme d'une fente annulaire (6) entre le piston (14b) et la paroi intérieure du pot de boîtier (14a).

4. Unité à élément de pression selon l'une des revendications 1 à 3, **caractérisée en ce que** l'unité à élément de pression (25, 27) est réalisée modulaire sous la forme d'un système fermé en lui-même.

5. Unité à élément de pression selon l'une des revendications 1 à 4, **caractérisée en ce que** le jeu d'engrenage maximum peut être réglé par la vis de réglage (11).

6. Unité à élément de pression selon l'une des revendications 1 à 5, **caractérisée en ce que** l'unité à élément de pression modulaire (25, 27) est disposée avec une mobilité axiale limitée dans un alésage (18) du boîtier d'un étage d'engrenage (23 ou 26).

7. Unité à élément de pression selon l'une des revendications 1 à 6, **caractérisée en ce que** l'unité à élément de pression modulaire (25, 27) se compose d'un élément de pression (4) qui, du côté de l'étage d'engrenage, est réalisé sous la forme d'un élément de liaison correspondant vers l'étage d'engrenage (23 ou 26) et, du côté opposé à l'étage d'engrenage (23 ou 26), présente les conditions spatiales pour deux chambres à fluide (1 et 7) qui sont séparées activement l'une de l'autre par le piston (14b) d'un amortisseur à fluide (14).

8. Unité à élément de pression selon la revendication 7, **caractérisée en ce que** le piston (14b) présente un point d'étranglement qui relie les chambres à fluide (1 et 7), et un passage qui est fermé par un clapet anti-retour (9).

9. Unité à élément de pression selon la revendication 1, **caractérisée en ce que** le ressort de piston (3) est intégré entre le piston (14b) et le fond du pot de boîtier (14a).
